# EUROPEAN PATENT SPECIFICATION

(11) **EP 0 629 644 B1**
(45) Date of publication and mention of the grant of the patent: **13.10.1999**
(21) Application number: 94304404.0
(22) Date of filing: 17.06.1994
(51) Int. Cl.: C08G 2/10

(54) **Process for the preparation of a polyoxymethylene terpolymer**
Verfahren zur Herstellung eines Polyoxymethylenterpolymers
Procédé de préparation d'un terpolymère à base de polyoxyméthylène

(30) Priority: 18.06.1993 JP 14760293
(43) Date of publication of application: 21.12.1994
(73) Proprietor: POLYPLASTICS CO. LTD., Chuo-Ku Osaka-shi Osaka 541 (JP)
(72) Inventor: Yamamoto, Kaoru, Fuji-shi, Shizuoka (JP); Maeda, Nagayoshi, Fujinomiya-shi, Shizuoka (JP); Kamiya, Makoto, Fujinomiya-shi, Shizuoka (JP); Murao, Toshiro, Fuji-shi, Shizuoka (JP)
(74) Representative: Jackson, Peter

(56) References cited:
- EP-A- 0 364 207
- EP-A- 0 412 783
- FR-A- 2 121 879
- US-A- 4 937 312

## Description

This invention relates to a process for the preparation of a polyoxymethylene terpolymer having a high degree of polymerization and improved heat stability. More particularly, it relates to a process for the preparation of a polyoxymethylene terpolymer which has a high degree of polymerization and an improved heat stability and contains an extremely small amount of unstable ends. The process of the invention employs specific polymerization conditions and a specific treatment for the deactivation of a catalyst in the cationic copolymerization of trioxane, a cyclic ether or cyclic acetal and a polyfunctional glycidyl compound having at least two epoxy groups in its molecule.

Polyoxymethylene copolymers have been known for a long time as engineering plastic materials. A method for the production of polyoxymethylene (also referred to herein as POM) generally comprises using a cyclic acetal such as trioxane as a principle monomer and a cyclic acetal or a cyclic ether having adjacent carbon atoms as a comonomer, further adding a chain transfer agent for controlling the degree of polymerization depending on the purpose, copolymerizing these monomers with the use of a cation-active catalyst and then bringing the polymerization product into contact with a catalyst neutralizing or deactivating agent or a solution thereof to thereby deactivate the same.

In general, a considerably large amount of unstable ends are present in a crude POM copolymer after the completion of the copolymerization. In order to apply this crude POM copolymer to practical purposes, it is therefore necessary to stabilize it by removing its unstable parts, which requires complicated post-treatments consuming much energy, thus resulting in an economic disadvantage. A crude POM copolymer containing a small amount of unstable parts after the completion of the copolymerization brings about advantages such that the final product has an improved stability and that post-treatments such as stabilization can be simplified. Accordingly it has been required to develop a polymerization process whereby a polymer with a small amount of unstable parts can be obtained. To satisfy this requirement, attempts have been made to develop a process for preparing a crude copolymer containing a small amount of unstable ends. For example, it is believed that it is preferable to effect polymerization while minimizing the active impurities in the polymerization system, though there is a limit to this method. There has been also proposed a method of conducting copolymerization in a polymerization system containing a specific stabilizer (see, for example, JP-A No. 59-227916 and No. 60-1216), though these methods do not necessarily give satisfactory results.

Regarding the treatments for deactivating a catalyst after the completion of the polymerization, it is generally recommended that a polymerization product is pulverized and then neutralized by bringing into contact with a neutralizing or deactivating agent or a solution thereof at a relatively high temperature (for example 50°C or above) (see, for example, U.S. Patent No. 2989509 and JP-A No. 58-34819). However it is highly troublesome and difficult per se to pulverize the whole of the crude polymerization product into fine particles. According to the present inventors' study, furthermore, it has been confirmed that the deactivation treatment at such a relatively high temperature as the one recommended in the above references is not preferable also in the case of the terpolymer which is the object of the present invention. That is, the deactivation treatment at a relatively high temperature (for example 50°C or above), which has been proposed as a preferable method hitherto, unexpectedly exerts the adverse effect. More precisely, in the competition between the deactivation of the catalyst through neutralization and the decomposition by the residual catalyst, the latter reaction preferentially proceeds in particular at a high temperature. Thus side reactions including the decomposition occur before the deactivation fully proceeds. As a result, the main chain is decomposed by the residual catalyst within a short period of time in the step of the deactivation of the polymerization catalyst, thus causing the decomposition of the main chain and the formation of new unstable parts before the catalyst has been completely deactivated.

Under these circumstances, the present inventors have conducted extensive studies to give a POM terpolymer having a high heat stability and a high degree of polymerization and containing an extremely small amount of unstable ends whereby the load in the stabilization step can be largely reduced. As a result, they have found out that side reactions including decomposition can be advantageously suppressed by regulating the amount of the impurities causative of the formation of unstable ends contained in the reaction system in the polymerization be below a given level, regulating the amount of a catalyst to be used in the polymerization to be in a given range and, further, employing specific conditions for the deactivation of the catalyst, i.e., quickly cooling the reaction product after the completion of the reaction. Thus they have combined these findings with the above-mentioned factors for the polymerization and thus succeeded in the acquisition of a POM copolymer having a high degree of polymerization and containing no more than a small amount of unstable ends which has been unattainable by the conventional methods. It has been proved that this process can exert further improved effects when applied to the preparation of a terpolymer which is the object of the present invention.

Accordingly, the present invention relates to a process for the preparation of a polyoxymethylene terpolymer having a melt index (MI) of 1.0 g/10 min (190°C, 2.16 kg) or below which comprises copolymerizing trioxane as a principal monomer with a cyclic ether or cyclic formal as a comonomer and a polyfunctional glycidyl compound having at least two epoxy groups in its molecule as a third component in the presence of boron trifluoride or a coordination compound thereof as a catalyst, characterized in that the total amount of impurities such as water, alcohols and acids causative of the formation of unstable ends contained in the reaction system is regulated to 1 x 10⁻² mole % or below based on the whole amount of the monomers, that the catalyst for the copolymerization is used in an amount of 1 x 10⁻³ to 1 x 10⁻² mole % based on the whole amount of the monomers and that the copolymerization is conducted at a temperature from 60 to 105°C followed by the cooling of the product to a temperature of 45°C or below within 30 seconds to deactivate the catalyst.

The present invention is characterized in that the amounts of the impurities and the catalyst contained in the reaction system in the polymerization are each maintained at a given level to thereby suppress the decomposition reaction during the polymerization and that the reaction product is immediately and quickly cooled under given conditions after the completion of the polymerization to thereby extremely slow down and suppress the side reactions including the decomposition which occur before the progress of the neutralization and deactivation of the catalyst.

Examples of the impurities causative of the formation of unstable ends of monomers in the polymerization include water, alcohols (for example, methanol) and acids (for example, formic acid). It is necessary that the total amount of these impurities be regulated to 1 x 10⁻² mole % or below, preferably 5 x 10⁻³ mole % or below, based on the whole of the monomers. As a matter of course, an excessively large content of these impurities is not preferable for obtaining a POM copolymer containing a small amount of unstable ends.

In the present invention, the molecular weight of the POM copolymer can be controlled to a desired level, if necessary, by using a chain transfer agent forming no unstable ends, for example, a low molecular weight linear acetal having alkoxy groups at its both ends, such as methylal.

The amount of the catalyst to be used in the polymerization is another important factor. As the catalyst, boron trifluoride or a coordination compound thereof which are commonly employed may be used. It is necessary that the amount of the catalyst be regulated to 1 x 10⁻³ to 1 x 10⁻² mole %, preferably from 1 x 10⁻³ to 7 x 10⁻³ mole % and still preferably from 1 x 10⁻³ to 5 x 10⁻³ mole %, based on the whole of the monomers. It is effective in preventing the formation of unstable ends to regulate the amount of the catalyst to be in the range as specified above. When the amount of the catalyst exceeds 1 x 10⁻² mole %, the polymerization temperature can be hardly maintained at an appropriate level and the decomposition reaction preferentially proceeds, which makes it difficult to give a polymer containing a small amount of unstable ends. On the other hand, an amount of the catalyst smaller than 1 x 10⁻³ mole % slows down the polymerization and lowers the polymerization yield within a given period of time, which is undesirable.

To fully achieve the effects of the present invention, the polymerization temperature is another important factor. It is substantially from 60 to 105°C, preferably from 65 to 100°C, throughout the polymerization period. Since the polymerization temperature closely relates to the amount of the catalyst, it can be controlled to be almost within this range by regulating the amount of the catalyst to the level as specified above under common conditions, for example, within a jacket temperature range usually available on a general industrial scale with the use of an aqueous medium. Accordingly, an appropriate polymerization temperature can be achieved without any particular specification. Strictly speaking, however, it is preferable that the polymerization temperature be maintained within the range as specified above by taking into consideration secondary factors other than the amount of the catalyst, for example, reaction scale, structure of the polymerizer and jacket temperature.

In the present invention, the polymerization is not particularly restricted in conditions other than those as specified above but can be effected in accordance with publicly known methods.

The cyclic ether or cyclic formal to be used as the comonomer is a compound represented by the following general formula: 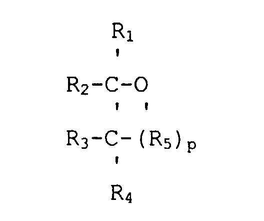 wherein R1, R2, R3 and R4 may be either the same or different from each other and each represents a hydrogen atom or an alkyl group, though they are hydrogen atoms in general; and R5 represent a methylene group or an oxymethylene group which may be substituted by an alkyl group (in this case, p is an integer of from 0 to 3) or a divalent group represented by the formula:

-(CH₂)_{q}-OCH₂- or -(O-CH₂-(CH₂)_{q}-OCH₂-

wherein p is 1; and q is an integer of from 1 to 4.

Examples of this comonomer include ethylene oxide, 1,3-dioxolane, diethylene glycol formal, 1,4-butanediol formal, 1,3-dioxane and propylene oxide. Among all, ethylene oxide, 1,3-dioxolane, 1,4-butanediol formal and diethylene glycol formal may be cited as preferable comonomers. These comonomers are used in an amount of from 0.2 to 10% by weight, preferably from 0.4 to 7% by weight, based on trioxane.

In the present invention, a polyfunctional glycidyl compound having at least two epoxy groups in its molecule is further used as a third component. As such a glycidyl compound, glycidyl ethers having at least two glycidyl groups in its molecule are preferable. These compounds are polyfunctional glycidyl compounds derived from polyhydric aliphatic alcohols and examples thereof include ethylene glycol diglycidyl ether, propylene glycol diglycidyl ether, 1,4-butynediol diglycidyl ether, hexamethylene diglycidyl ether and pentaerythritol tetraglycidyl ether. Further, polyfunctional glycidyl ethers derived from polyhydric aromatic alcohols are usable therefor. As examples thereof, resorcinol diglycidyl ether and bisphenol A diglycidyl ether may be cited. Furthermore, polyfunctional glycidyl ethers derived from polyalkylene glycols are usable therefor. As examples thereof, polyethylene glycol diglycidyl ether, polypropylene glycol diglycidyl ether and polybutylene glycol diglycidyl ether may be cited. These polyfunctional glycidyl compounds are used in an amount of from 0.001 to 5% by weight, preferably from 0.01 to 1% by weight, based on trioxane.

The POM terpolymer prepared by the copolymerization with the use of the polyfunctional glycidyl compound as the third component is a copolymer with a branched or cross-linked structure. Although it has a high molecular weight and shows an extremely low melt index (in general, 1.0 g/10 min or below) when determined under usual conditions (at 190°C under a load of 2160 g), it shows a low viscosity and a high flowability under a high load (high shear rate). Thus it scarcely suffers from a decrease in molecular weight due to, for example, the breakage of the major chain or the formation of unstable ends induced in the post-treatment stages wherein melt kneading such as extrusion or melt molding is effected. Accordingly, it is suitable for giving a final product which has a high molecular weight and an excellent stability. The terpolymer of the present invention has a high melt tension, which makes it suitable for extrusion molding and blow molding too.

In order to control the molecular weight of the POM copolymer to be on a desired level in the polymerization process of the present invention, if necessary, a small amount of a chain transfer agent, which forms no unstable ends, can be used without causing any trouble, as described above. However the amount of a chain transfer agent which forms unstable ends, if employed, should be restricted to be within the range of the content of the active impurities as specified above.

The polymerization process of the present invention can be effected by using the same equipment and method as those employed in the publicly known processes for the polymerization of trioxane. Namely, any of the batch and continuous system may be employed and any of the solution polymerization and melt bulk polymerization methods may be employed. The continuous bulk polymerization method, wherein liquid monomers are used and a powdery solid polymer is obtained as the polymerization proceeds, has been generally employed industrially and may be cited as a preferable one. In this case, the reaction system may further contain an inert liquid medium, if necessary.

As the polymerizer to be used in the present invention, a reaction vessel provided with a stirrer which has been commonly used may be cited in the case of a batch system. In the case of a continuous system, on the other hand, those which have been proposed as the apparatus for the continuous polymerization of trioxane, for example, a Ko-neader, a twin-screw type continuous extruder mixer and a twin-screw paddle type continuous mixer can be used. In the case of a closed system, it may consist of two or more stages. It is particularly preferable to use an apparatus having a grinding means whereby the solid polymer formed by the polymerization can be obtained in the form of fine particles.

In order to achieve the effects of the present invention, the post-treatment conditions are also highly important. More precisely, the reaction mixture discharged from the polymerizer after the completion of the polymerization should be cooled substantially to a temperature of 45°C or below within 30 seconds, preferably to a temperature of 45°C within 20 seconds and substantially to a range of 35 to 15°C within 30 seconds. The term "after the completion of the polymerization" as used herein means "when discharged from the polymerizer which is substantially hermetically closed", namely, at the point where the reaction mixture is brought into contact with the atmosphere containing oxygen and moisture or a medium such as water. A higher cooling rate is the more desirable. It is particularly important to shorten the period of time of holding the reaction mixture at a high temperature. It has been proved that when the cooling rate is low, in particular, at such a high temperature of 50°C or above as the one proposed hitherto, side reactions preferentially proceed even when an agent for neutralizing or deactivating the catalyst is added immediately and thus the decomposition of the product or a decrease in the degree of polymerization induced thereby and the formation of new unstable ends cannot be sufficiently suppressed.

These side reactions including the decomposition the more preferentially occur at the higher temperature. At a high temperature immediately after the completion of the polymerization, in particular, the moisture contained in the atmosphere in contact with the reaction product accelerates the side reactions and adversely affects the reaction product. Therefore it is undesirable to expose the reaction product to an atmosphere containing moisture at a high temperature even when the moisture content is similar to that of the air. Therefore, the situation of an inert atmosphere substantially free from moisture should be rather regarded as continuance of the polymerization. In such a case, the extent of the side reactions is reduced, even when the cooling rate is relatively low. Thus the reaction product may be sufficiently cooled in such an atmosphere substantially free from moisture and then brought into contact with a neutralizing or deactivating agent for a sufficient period of time to deactivate the catalyst. Even in the presence of water, however, it will surface when the product is quickly cooled so as not to be held at a high temperature. To cool the product most quickly, it is generally effective to immerse it in a large amount of a liquid at a low temperature. It is particularly effective in the quick cooling to use an aqueous solution of a large heat capacity. As described above, the presence of water is not preferable regarding the side reactions at a high temperature. However, a relatively large amount of water is a preferable medium from the viewpoint of cooling rate. When the high temperature period wherein the side reactions preferentially proceed is shortened, the cooling with an aqueous solution becomes rather effective.

As a matter of course, it is preferable to add a basic compound for neutralizing or deactivating the catalyst to thereby effect the neutralization and deactivation of the catalyst simultaneously with the cooling.

In the stage of the substantial cooling, it is preferable as a matter of course that the reaction product, in particular in the case of a bulk polymer, be pulverized. It is most favorable when the discharge from the polymerizer has been finely divided. When the product is in the form of relatively large particles, it is preferable to quickly pulverize the product after the discharge from the polymerizer, particularly in the cooling medium (for example, in water) in the early stage of the cooling.

When the reaction product is quickly cooled to a temperature of 45°C or below, preferably from 35 to 15°C, according to the process of the present invention, the neutralization and deactivation of the catalyst can be effected over a sufficient period of time without causing any side reactions. After the complete deactivation of the catalyst, the reaction product scarcely suffers from a decrease in the degree of polymerization due to side reactions or the formation of unstable ends even when the temperature is elevated in the subsequent treatments, unless an acidic medium is employed. Thus it can be washed and dried at a relatively high temperature. On the other hand, an extremely low temperature of 10°C or below is not preferable, since the deactivation proceeds only extremely slowly and thus requires a long time.

As the basic compound for neutralizing and deactivating the polymerization catalyst in the present invention, ammonia, amines such as triethylamine, tributylamine, triethanolamine and tributanolamine, hydroxides and salts of alkali metals and alkaline earth metals and other known deactivators for catalysts can be used. It is preferable that these deactivators be dissolved in the cooling medium for the reaction product, for example, water or organic solvents such as cyclohexane, benzene or toluene and brought into contact with the catalyst simultaneously with the cooling of the polymer to thereby neutralize the catalyst. It is particularly preferable to use water as the solvent.

In the present invention, the deactivation of the polymerization catalyst may be followed by the washing of the copolymer, the separation and recovery of unreacted monomers and drying, if required. Further, the copolymer is subjected to the stabilization step, if required, and various additives such as stabilizers are added thereto. Then it is melt kneaded and pelletized to thereby give a final product. As described above, the POM terpolymer of the present invention contains an extremely small amount of unstable ends, has a high flowability in the step of melt kneading regardless of its high degree of polymerization (low melt index) compared with a linear polymer, undergoes little exothermic decomposition due to a high shear force and thus relieves the load of stabilization treatment. Accordingly, a sufficiently stable polymer can be obtained by simple finishing operations. In addition, the unstable parts remaining therein can be volatilized off during the melt kneading extrusion for the addition of stabilizers, etc.

According to the process of the present invention, a stable POM terpolymer which has excellent heat stability, an extremely high degree of polymerization and a melt index (MI) of 1.0 g/10 min or below, or even 0.05 to 0.5 g/10 min (as determined at 190°C under a load of 2160 g), which has been unattainable by any conventional method, can be obtained and thus a resin material which can be processed by special molding techniques such as extrusion molding or blow molding can be provided.

The POM terpolymer obtained by the process of the present invention, which has an extremely high degree of polymerization in terms of a MI of 1.0 or below (or even 0.5 or below) and a highly excellent heat stability, makes it possible to give a molded article of a high performance and excellent qualities, which has been unattainable by any conventional method. Further, the terpolymer contains no more than a small amount of unstable parts and thus the post-treatments can be simplified and the obtained final product has an improved heat stability. Accordingly, it can be processed not only by injection molding but also by extrusion molding and blow molding which has been most difficult hitherto, thus enlarging the application range.

### Examples

To further illustrate the present invention in greater detail, and not by way of limitation, the following Examples will be given.

The definitions of the terms and determination methods described in the Examples and Comparative Examples are as follows.

### % or ppm:

on weight basis unless otherwise noted.

### Polymerization yield:

the ratio (% by weight) of the obtained polymer to the whole of the feed monomers.

### Melt index (MI):

a value (g/10 min) determined at 190°C under a load of 2160 g. It is evaluated as a character corresponding to molecular weight. Namely, a lower MI corresponds to a higher molecular weight (to prevent decomposition during the determination, a small amount of a given stabilizer was added before the determination).

### Alkali decomposition rate (content of unstable parts):

1 g of a copolymer was introduced into 100 ml of a 50% aqueous solution of methanol containing 0.5% of ammonium hydroxide and heated to 170°C for 45 minutes in a hermetically closed container. Then the quantity of formaldehyde dissolved in the solution was determined and expressed in percentage based on the polymer.

### Heat weight loss:

5 g of a copolymer was ground and a powdery stabilizer comprising 2,2'-methylenebis(4-methyl-6-t-butylphenol) (0.5%) and dicyandiamide (0.1%) was well mixed therewith. After heating in the air at 220°C for 45 minutes, the weight loss was determined.

### Examples 1 to 9 and Comparative Examples 1 to 3

Use was made of a continuous mixing reactor provided with a barrel having a cross-section consisting of two circles partly overlapping together and an external jacket through which a heat (cooling) medium was passed and two rotating shafts provided with stirring and propelling paddles and located in the direction of the major axis in the barrel. Hot water at 80°C was pasted through the jacket and the two rotating shafts were rotated at 100 rpm. From one end of the reactor, trioxane containing 3.3% of 1,3-dioxolane as a comonomer and each polyfunctional glycidyl compound specified in Table 1 optionally together with methylal as a chain transfer agent were continuously supplied. At the same time, a 1% solution of boron trifluoride butyl etherate in cyclohexane was supplied from the same end of the reactor at the concentration as specified in Table 1 on the basis of the whole of the monomers, thus effecting copolymerization.

Table 1 shows the analytical data on the components and amounts of the impurities contained in the feed monomers.

To the reaction product (at about 90°C) discharged from the outlet of the polymerizer was added an aqueous solution (at 20°C; about 4 times as much finally) containing 1000 ppm of triethylamine immediately after the discharge. Then the resulting mixture was mixed, pulverized and cooled to 45°C within 20 seconds after the discharge and to 30°C within the subsequent 10 seconds. Then it was stirred at this temperature for 30 minutes. After centrifuging and drying, the final polymer was obtained.

Table 1 shows the polymerization yields and the properties of the obtained polymers.

### Examples 10 to 16 and Comparative Examples 4 to 7

Polymerization was effected under the same polymerization conditions as these specified in Example 2 or 7 (Table 1) but the conditions for the deactivation following the polymerization were varied. Namely, the reaction product discharged from the outlet of the polymerizer was mixed with an aqueous alkali solution as specified in Table 2 under pulverizing and the catalyst was deactivated under the temperature conditions as specified in Table 2.

The temperature (cooling) conditions were achieved by controlling the temperature and amount of the employed aqueous alkali solution and, furthermore, effecting multi-stage addition while varying the temperature. After cooling and stirring at the specified temperature for 60 minutes, the product was centrifuged and dried to thereby give the final polymer. Table 2 shows the properties of the polymer thus obtained.

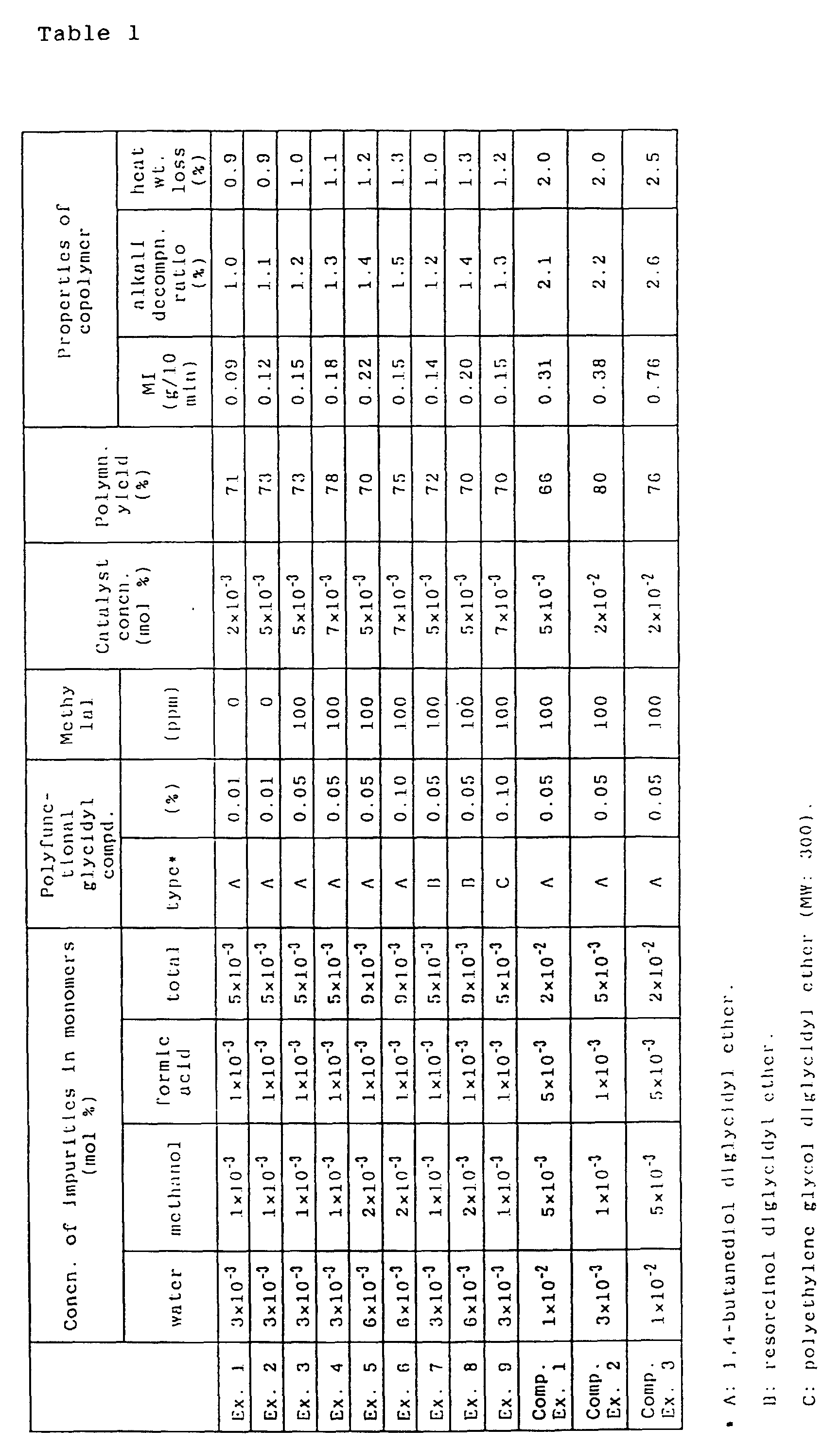

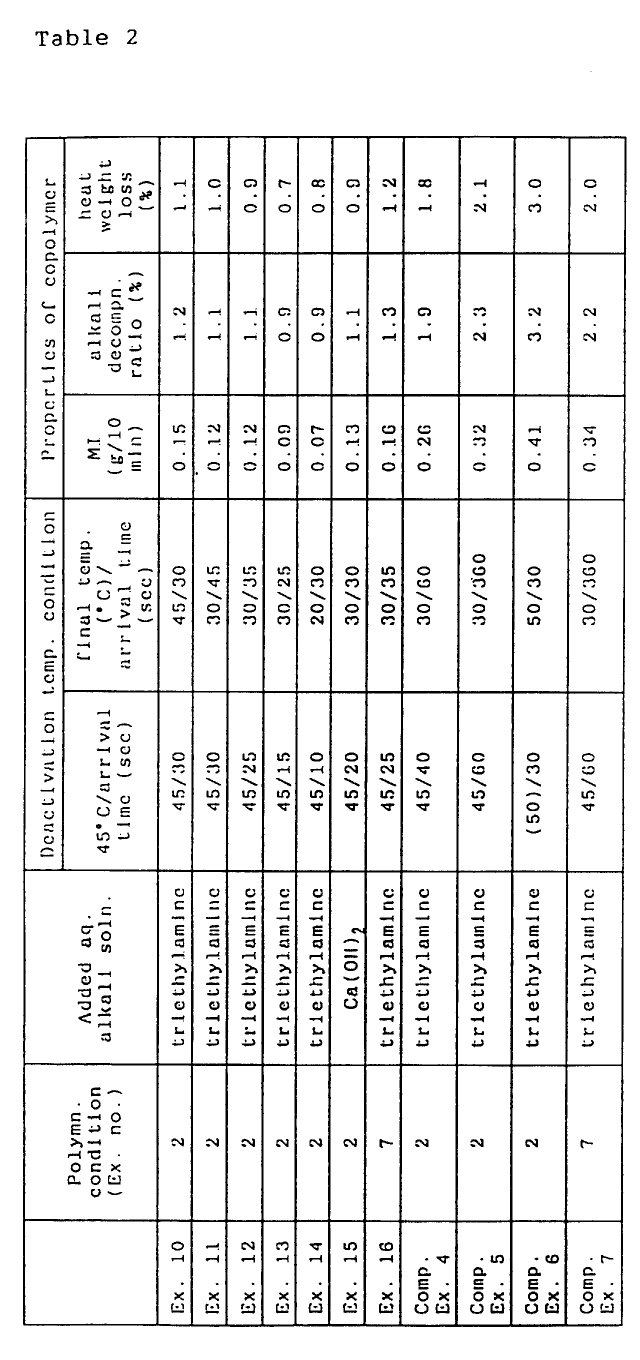

## Claims

1. A process for the preparation of a polyoxymethylene terpolymer having a melt index (MI) of 1.0 g/10 min (190°C, 2.16 kg) or below which comprises copolymerizing trioxane as a principal monomer with a cyclic ether or cyclic formal as a comonomer and a polyfunctional glycidyl compound having at least two epoxy groups in its molecule as a third component in the presence of boron trifluoride or a coordination compound thereof as a catalyst, characterized in that the total amount of impurities such as water, alcohols and acids causative of the formation of unstable ends contained in the reaction system is regulated to 1 x 10⁻² mole % or below based on the whole amount of the monomers, that the catalyst for the copolymerization is used in an amount of 1 x 10⁻³ to 1 x 10⁻² mole % based on the whole amount of the monomers and that the copolymerization is conducted at a temperature from 60 to 105°C followed by the cooling of the product to a temperature of 45°C or below within 30 seconds to deactivate the catalyst.

2. A process as set forth in claim 1, wherein the polyfunctional glycidyl compound having at least two epoxy groups in its molecule is diglycidyl ether.

3. A process as set forth in claim 1 or claim 2, wherein the cyclic ether or cyclic formal comonomer is selected from ethylene oxide, 1,3-dioxolane, 1,4-butanediol formal and diethylene glycol formal.

4. A process as set forth in any preceding claim, wherein the total amount of the said impurities is regulated to 5 x 10⁻³ mole % or below, based on the whole of the monomers.

5. A process as set forth in any preceding claim, wherein the amount of the catalyst is regulated to 1 x 10⁻³ to 5 x 10⁻³ mole %, based on the whole of the monomers.

6. A process as set forth in any preceding claim, wherein the melt index of the terpolymer is 1.0 g/10 min or below (as determined at 190°C under a load of 2160 g).

7. A process as set forth in any preceding claim, wherein the copolymerization is conducted at a temperature ranging from 60 to 105°C.

8. A process as set forth in any preceding claim, wherein the cooling of the product after the completion of the copolymerization is conducted with a low-temperature solution of a basic compound.

9. A process as set forth in claim 8, wherein water or an aqueous solution is used as the solvent for dissolving the basic compound.

## Patentansprüche

1. Verfahren zur Herstellung eines Polyoxymethylen-Terpolymers mit einem Schmelzflußindex (MI) von 1,0 g/10 min (190°C, 2,16 kg) oder darunter, umfassend das Copolymerisieren von Trioxan als Hauptmonomer mit einem cyclischen Ether oder cyclischen Formal als Comonomer und einer polyfunktionellen Glycidylverbindung, die wenigstens zwei Epoxygruppen im Molekül aufweist, als dritte Komponente in Gegenwart von Bortrifluorid oder einer Koordinationsverbindung davon als Katalysator, dadurch gekennzeichnet, daß die Gesamtmenge der in dem Reaktionssystem enthaltenen Verunreinigungen, wie Wasser, Alkohole und Säuren, die für die Bildung instabiler Enden verantwortlich sind, auf 1 x 10⁻² Mol-% oder darunter reguliert ist, bezogen auf die Gesamtmenge der Monomere, daß der Katalysator für die Copolymerisation in einer Menge von 1 x 10⁻³ bis 1 x 10⁻² Mol-% verwendet wird, bezogen auf die Gesamtmenge der Monomere, und daß die Copolymerisation bei einer Temperatur von 60 bis 105°C durchgeführt wird, woraufhin das Produkt innerhalb von 30 Sekunden auf eine Temperatur von 45°C oder darunter abgekühlt wird, um den Katalysator zu desaktivieren.

2. Verfahren gemäß Anspruch 1, wobei es sich bei der polyfunktionellen Glycidylverbindung, die wenigstens zwei Epoxygruppen im Molekül aufweist, um Diglycidylether handelt.

3. Verfahren gemäß Anspruch 1 oder 2, wobei der als Comonomer verwendete cyclische Ether oder das cyclische Formal aus Ethylenoxid, 1,3-Dioxolan, 1,4-Butandiolformal und Diethylenglycolformal ausgewählt ist.

4. Verfahren gemäß einem der vorstehenden Ansprüche, wobei die Gesamtmenge der Verunreinigungen auf 5 x 10⁻³ Mol-% oder darunter reguliert ist, bezogen auf die Gesamtmenge der Monomere.

5. Verfahren gemäß einem der vorstehenden Ansprüche, wobei die Menge des Katalysators auf 1 x 10⁻³ bis 5 x 10⁻³ Mol-% reguliert ist, bezogen auf die Gesamtmenge der Monomere.

6. Verfahren gemäß einem der vorstehenden Ansprüche, wobei der (bei 190°C unter einer Last von 2160 g bestimmte) Schmelzflußindex des Terpolymers 1,0 g/10 min oder weniger beträgt.

7. Verfahren gemäß einem der vorstehenden Ansprüche, wobei die Copolymerisation bei einer Temperatur im Bereich von 60 bis 105°C durchgeführt wird.

8. Verfahren gemäß einem der vorstehenden Ansprüche, wobei das Abkühlen des Produkts nach der Beendigung der Copolymerisation mit einer Lösung einer basischen Verbindung mit einer niedrigen Temperatur durchgeführt wird.

9. Verfahren gemäß Anspruch 8, wobei Wasser oder eine wäßrige Lösung als Lösungsmittel zum Auflösen der basischen Verbindung verwendet wird.

## Revendications

1. Un procédé pour la préparation d'un terpolymère de polyoxyméthylène ayant un indice de fusion (IF) de 1,0 g/10 min (190°C, 2,16 kg) ou moins, qui consiste à copolymériser du trioxanne comme monomère principal avec un éther cyclique ou un formal cyclique comme comonomère et un composé glycidylique polyfonctionnel ayant au moins deux groupes époxy dans sa molécule comme troisième composant, en présence de trifluorure de bore ou d'un composé de coordination de celui-ci comme catalyseur, caractérisé en ce que la quantité totale d'impuretés telles que l'eau, les alcools et les acides, qui sont cause de formation d'extrémités instables, contenues dans le système réactionnel est régulée à 1 × 10⁻² mol % ou moins par rapport à la quantité totale des monomères, en ce que le catalyseur pour la copolymérisation est utilisé en une quantité de 1 × 10⁻³ à 1 × 10⁻² mol % par rapport à la quantité totale de monomères et en ce que la copolymérisation est conduite à une température de 60 à 105°C, puis le produit est refroidi à une température de 45°C ou moins en 30 secondes au plus pour désactiver le catalyseur.

2. Un procédé tel que défini dans la revendication 1, dans lequel le composé glycidylique polyfonctionnel ayant au moins deux groupes époxy dans sa molécule est l'éther de diglycidyle.

3. Un procédé tel que défini dans la revendication 1 ou la revendication 2, dans lequel l'éther cyclique ou formal cyclique comonomère est choisi parmi l'oxyde d'éthylène, le 1,3-dioxolanne, le formal de 1,4-butanediol et le formal de diéthylène-glycol.

4. Un procédé tel que défini dans l'une quelconque des revendications précédentes, dans lequel la quantité totale desdites impuretés est régulée à 5 × 10⁻³ mol % ou moins par rapport à la totalité des monomères.

5. Un procédé tel que défini dans l'une quelconque des revendications précédentes, dans lequel la quantité du catalyseur est régulée à 1 × 10⁻³ à 5 × 10⁻³ mol % par rapport à la totalité des monomères.

6. Un procédé tel que défini dans l'une quelconque des revendications précédentes, dans lequel l'indice de fusion du terpolymère est de 1,0 g/10 min ou moins (tel que déterminé à 190°C sous une charge de 2160 g).

7. Un procédé tel que défini dans l'une quelconque des revendications précédentes, dans lequel la copolymérisation est conduite à une température comprise entre 60 et 105°C.

8. Un procédé tel que défini dans l'une quelconque des revendications précédentes, dans lequel le refroidissement du produit après l'achèvement de la copolymérisation est effectué au moyen d'une solution à basse température d'un composé basique.

9. Un procédé tel que défini dans la revendication 8, dans lequel on utilise de l'eau ou une solution aqueuse comme solvant pour dissoudre le composé basique.
